Europäisches Patentamt

**European Patent Office**

Office européen des brevets

(11) Publication number: **0 007 927**
A1

## EUROPEAN PATENT APPLICATION

(21) Application number: 78300263.7

(22) Date of filing: 07.08.78

(51) Int. Cl.³: **A 22 C 11/12**, B 65 B 61/08, B 26 D 7/06

(43) Date of publication of application: 20.02.80
Bulletin 80/4

(84) Designated Contracting States: **BE DE FR GB NL SE**

(71) Applicant: **TOTAI COMPANY LIMITED, 5-24-17, Ueno Taito-ku, Tokyo (JP)**

(72) Inventor: **Tetsuro, Mano, 1-6-32 Sanno Ohta-Ku, Tokyo (JP)**

(74) Representative: **Funge, Harry et al, SYDNEY E-M'CAW & CO Saxone House 52-56 Market Street, Manchester M1 1PP (GB)**

(54) Apparatus for cutting a string of sausage links.

(57) An apparatus for cutting a string of sausage links at a junction between links into lengths of one or more links, comprises a conveying means (32) for advancing the string of links. a stretching means (41) for stretching the junction to be cut and a cutting means provided between the conveying and stretching means to cut the string at the junction (86). The conveying means (32) pinches and conveys the string of sausage links. The stretching means (41) is disposed downstream of the conveying means (32) and pinches and receives the string from the conveying means, and is coupled to the conveying means for operation therewith at a greater advancing speed to stretch the junction between the links. The cutting means is connected to an electric eye (73) which detects the junction and operates the cutting means.

(EP11407)                    - 1 -
(3.8.78)

Apparatus for cutting a string of sausage links

This invention relates to an apparatus for exactly and
efficiently cutting a string of sausage links, such as
vienna sausage, frankfurter or the like, into lengths
one or more pieces.

In the conventional art, the cutting of a string of
sausage links into lengths one or more pieces has often
been carried out manually.  Disadvantages of inefficient
and inexact cutting exists in this method; namely, manual
work is inefficient for cutting.

In order to avoid the disadvantages, there is proposed
in U.S. Specification Serial No. 3,659,316 an apparatus
for cutting a string of sausage links into lengths (one
or more pieces) which comprises means for feeding to a
severing station a string of sausage links joined together by junctions having light interruption characteristics significantly less than the sausage links, a
photocell and opposed light source proximal to the
severing station on the emergent side of the feeding
means, an elongated knife at the cutting station
rotatable in a plane generally perpendicular to and
extending through each successive junction, drive means
for the knife, control means for the drive means
actuated in respect to a signal from the photocell, the

0007927

control means generating only one rotation of the knife for each junction through a constant, fixed arc, the response  of the knife being timed to the axial velocity of the sausage links to sever the string at each junction and means for discharge severed sausage links from the severing station.  The means for feeding a string of sausage links to the severing station and for discharge the severed sausage links from the severing station comprise respective notched rollers.  Using the notched rollers to engage the sausage in the first instances results in the disadvantage; the notched rollers may cause damage to the sausages.

Therefore, the generic object of this invention is to improve the above-mentioned defect in the prior art.

The specific object of this invention is to provide an apparatus for cutting a string of sausage links which can exactly and efficiently cut the sausage links into predetermined one or more pieces, without damaging the sausages.

A further object of this invention is to provide an apparatus which can exactly cut the sausage links into predetermined pieces at the twisted junction of the sausage links.

Another object of this invention is to provide an apparatus which can adequately stretch the twisted junction at a cutting station.

According to the present invention there is proposed an apparatus for cutting a string of sausage links at a junction between adjacent links comprising a conveying

(EP11407)
(3.8.78)

— 3 —

means provided at the upstream side of the apparatus, a
stretching means provided downstream of the conveying
means and a cutting means to cut the sausage string at a
junction and provided at a cutting station intermediate
said conveying means and stretching means, characterised
by conveying means for advancing the links at a first
speed, which means includes a pair of spaced-apart,
opposed movable roller belts defining a passageway for
the links, each roller belt having a plurality of spaced
rotatably mounted rollers disposed therealong engageable with respective lateral sides of the links to
pinch them and advance the string as the roller belts
move and drive means connected to said roller belts for
moving them along said feed passageway, stretching means
spaced from said conveying means for receiving the links
from said conveying means and for further advancing the
links at a second speed greater than said first speed
to stretch each junction between links as it passes
between said conveying means and stretching means, said
stretching means including a pair of opposed movable
members engageable with respective lateral sides of said
links to pinch the links and drive means connected to
said opposed movable members to advance such members,
cutting means disposed between said conveying and
stretching means for cutting a selected one of the
stretched junctions to divide the sausage string into
lengths of at least one link, said cutting means
including a cutting member movable in the space between
said conveying and stretching means and drive means
connected to said cutting member for moving such member,
and control means connected to said cutting means
including a sensor for sensing the passage of each
stretched junction and adapted to activate said cutting
member drive means when a selected one of said stretched junction passes said sensor.

Thus, the invention contemplates apparatus for cutting a string of sausage links which comprises a conveying means which pinches and advances a string of sausage links to a cutting station, a stretching means which is provided on the downstream portion of the conveying means with a slight distance and advancing the sausage links at a higher speed than that of conveying means in order adequately to stretch the twisted junction of sausage links at the cutting station provided between the conveying means and stretching means, a cutting means provided on the cutting station and including a cutter device and electric eye connected thereto which senses the twisted junction of the sausage links for exact cutting of the sausage string.  The electric eye contains a count memory means in a circuit to control the cutting operation of the cutter device for severing predetermined lengths of one or more sausage links.

The apparatus of the invention can thus adequately stretch a twisted junction between sausage links fed into the cutting station by the differential between the advancing speeds of the conveying means and the stretching means. The electric eye detects the stretched twisted junction and electrically operates the cutter device in order to cut the string at this junction.

Other objects of this invention and advantages thereof will be illustrated in the hereinafter disclosed preferred embodiments of the invention.

This invention will be illustrated in detail by way of examples in the accompanying drawings, in which:-

(EP11407)                    - 5 -
(3.8.78)

Fig. 1    is a partly sectioned plan view of the
          preferred embodiment of this invention;
Fig. 2    is a side elevational view of the embodiment
          of Fig. 1;
Fig. 3    is a front elevational view of the embodiment
          of Fig. 1; and
Fig. 4    is a plan view of another embodiment of this
          invention.


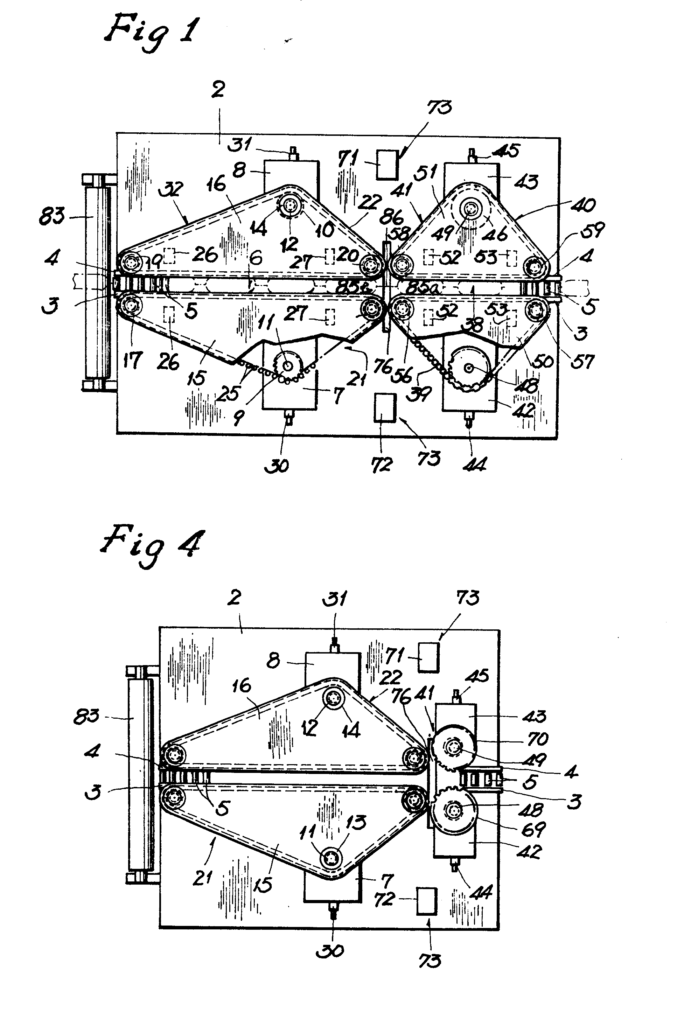

Referring now to the drawings, particularly to Figs. 1, 2, and 3, a table 2, per se movable with castors 1, is provided with a passageway 6 comprising side members 3, 4 and a plurality of free rolls 5 confined between the side members 3, 4.  The passageway 6 is arranged longitudinally of the centre line of the table 2.  On both sides of the passageway 6, there are provided transversely movable bearings 7, 8.  Driving sprocket wheels 9, 10 are provided on the upper portions of driving shafts 11, 12 rotatably journalled in the movable bearings 7, 8, respectively.  Thereby, each driving sprocket wheel 9, 10, is movable towards and away from the passageway 6.

Plates 15, 16 are provided at the upper ends of the driving shafts 11, 12, such plates 15, 16 being mounted on the shafts via bearings 13, 14, respectively.  Each plate 15, 16 extends inwardly and is supported by legs 26, 27 which engage guide tracks 28, 29, arranged transversely on the table.  Under each plate 15, 16 are provided a respective pair of spaced guide sprocket wheels 17, 18 and 19, 20 adjacent the passageway 6.  Endless belts 21, 22 engage with groups of related wheels 9, 17, 18 and 10, 19, 20, respectively, and each comprises an upper chain 23 and a lower chain 24.  A plurality of rollers 25 are rotatably mounted in and extend between chains 23 and 24 and form the sides of passageway 6. The rollers bear against the lateral sides of the sausage links to pinch them and to allow the moving belts 21, 22 to convey the string of sausage links forward.

Roller belts 21, 22 are mounted on table 2 for movement towards and away from passageway 6 to provide for adjusting the width of such passageway 6 according to the widths of sausage under processing, such adjustment being effected by movement of the bearings 7, 8 by means of bolts 30, 31, respectively.

Driving shafts 11, 12 of the driving sprocket wheels 9, 10, are connected to respective universal shafts 33, 34, having universal joints at each end thereof, through the bearings 7, 8. The universal shafts 33, 34 extend downwardly and connect to a reduction gear device 36, 37, respectively. Each reduction gear device 36, 37 is connected to an electric motor 35 for driving each roller belt 21, 22 at similar speed and in clockwise and counterclockwise direction respectively.

The passageway 6 and the endless roller belts 21, 22 constitute a conveying means 32.

At the downstream end of the conveying means 32, there is provided a stretching means 41 comprising a passageway 38 and endless belts 39, 40 which have inner and outer surfaces provided with notchings or knurling. The stretching means 41 is of like construction to the conveying means 32 except for the difference in length and advancing speed of the endless belts.

(EP11407)
(3.8.78)

In the stretching means 41, driving shafts 48, 49 are rotatably journalled in movable bearings 42, 43 and are provided with pulleys 46, 47 having notched or knurled surfaces. Triangular mounted plates 50, 51 are positioned over pulleys 46, 47 and provide an upper mounting for driving shafts 48, 49. Each plate 50, 51 extends inwardly, and is supported by legs 52, 53 which engage transverse guide tracks 54, 55. A pair of guide pulleys 56, 57 and 58, 59 are mounted for rotation on respective plates 50, 51. The belts 39, 40 are fitted around each group of driving and guide pulleys 46, 56, 57 and 47, 58, 59. Each belt 39, 40 is movable towards and away from passageway 38 in a manner similar to roller belts 21, 22, by adjusting bolts 44, 45.

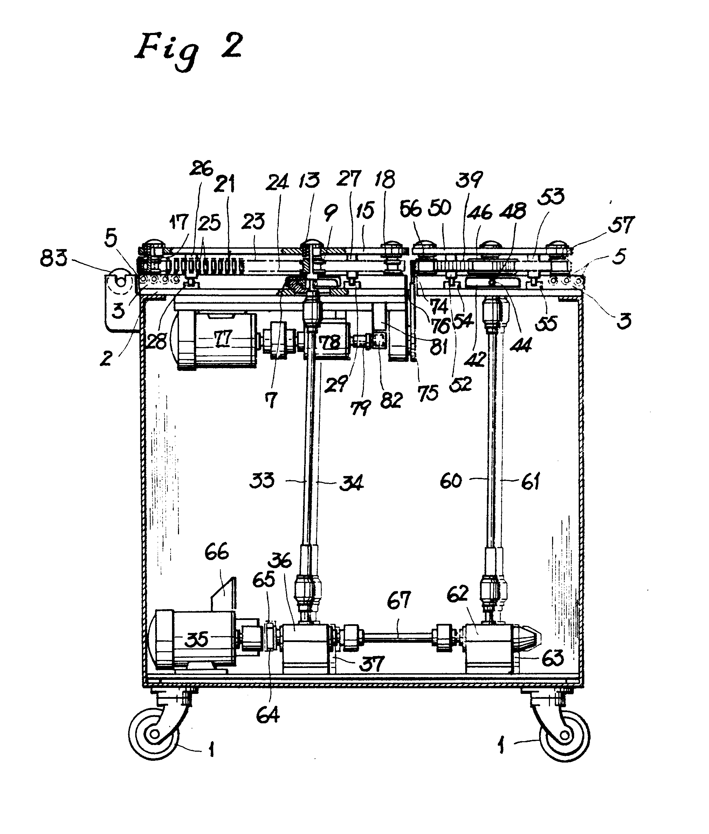

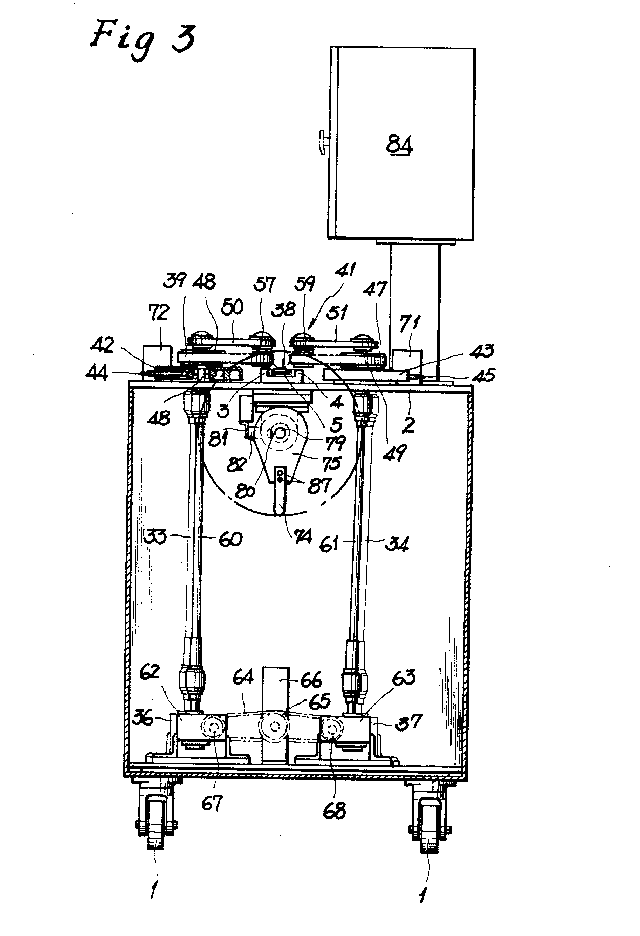

As shown in Figs. 2 and 3, each driving shaft 48, 49 is connected to a respective universal shaft 60, 61, having universal joints on both ends thereof, through the bearing 42, 43 and each universal shaft 60, 61 extends downwardly and is connected to reduction gear device 62, 63. Each reduction gear device 62, 63 is connected to the electric motor 35 through belts and pulleys. Thus, by driving the motor 35, belts 39, 40 are respectively advanced clockwise and counterclockwise.

The driving means for belts 21, 22, 39, 40, includes electric motor 35 and further includes a motor pulley 65 supported by a member 66 and connecting shafts 67, 68 interconnecting each pair of reduction gear devices 36, 62 and 37, 63. Shafts 67, 68 are connected to the pulley 65 through a belt 64.

Each driving pulley 46, 47 of the stretching means 41 may be of a diameter twice that of the driving sprocket wheels 9, 10 of the conveying means 32.  In such a construction, the driving rates of the shafts 11, 12 and 48, 49 are kept equal so that the advancing speed of the belts 39, 40 is greater than that of the roller belts 21, 22.

While, differences in advancing speed of the conveying means and the stretching means can be introduced by utilising driving sprocket wheels 9, 10 and driving pulleys 46, 47 are different sizes, the gears of reduction gear devices 36, 37 and 62, 63 can also be changed to like effect.

In another embodiment of the invention, see now Fig. 4, the belts 39, 40 of the stretching means 41 are replaced by rotating wheels 69, 70 of larger diameter than sprocket wheels 9, 10.  Wheels 69, 70 are notched or knurled, as shown in Fig. 4, to engage with the sausage links.  The wheels 69, 70 are provided adjacent the conveying means 32 and on both sides of passageway 38. They are movable towards and away from the passageway 38 and driven by the motor 35 through the reduction gear devices 62, 63, in like manner to the belts 39, 40.

This differential in advancing speeds causes the sausage string to be stretched at the twisted junction between links in the area between the conveying means 32 and the stretching means 41.  The use of rollers 35 in the belts 21, 22 also advantageously effects the feeding of the sausage string in that the links are pinched between the opposed belts to advance the string and at the same time allow for a forward displacement of the string due to the pull of the stretching means 41, in case this pull threatens to stretch the twisted junction to the breaking point.

In the area between the conveying means and the stretching means, there is disposed a cutting station for cutting a string of sausage links at a twisted junction or ligature between links.  Electric eye 73 comprises an emitter means 71 and a receiving means 72 which together constitute an electric eye 73, are provided at opposite sides of the cutting station of the table 2.  The means 71 directs a ray of light towards the receiving means 72 across the cutting station to detect the twisted junction between sausage links as they pass.  There is further provided a cutter device at the cutting station, see now particularly Fig. 3, such device comprising a plate 75 on which is bolted a cutting edge 74 protruding outwardly and fastened by bolts 87.  The path transversed by the cutting edge 74 on rotation of the plate 75 is such that the said edge will protrude upwardly through a slot 76 provided in the table 2 in the region of the cutting station.  The rotating plate 75 is secured on the end of a rotating shaft 79 connected to an electric motor 77 through clutch member 78 and provided with a stud 80 thereon.

A proximity switch 82 is mounted on a member 81 adjacent shaft 79.

The electric eye 73 and the clutch member 78 are so interconnected via an electric circuit in a control box 84 as to drive the motor 77 for rotating plate 75 when the electric eye 73 detects a stretched twisted junction of sausage links pass the cutting station.

A control means such as control box 84 can be provided with a count memory means in the electric circuit for
the electric eye 73 to effect the cutting timing for
cutting a string of sausage links into lengths of one
or more links.

In the drawings, 83 is a feeding roller provided on
the front or upstream side of the apparatus, and the
control box 84 may further control the whole electric
systems of the apparatus.

In operation, on starting electric motor 35, each
universal shaft 36, 37, 60, 61 is driven through each
reduction gear device 33, 34, 62, 63, thus driving each
driving shaft 11, 12, 48, 49 and advancing each roller
belt 21, 22 and belt 39, 40 clockwise or counterclockwise, as appropriate.

Since the driving pulleys 46, 47 provided on the
driving shafts 48, 49 are larger in diameter than the
driving sprocket 9, 10, and are driven at similar speed,
the belts 39, 40 are advanced at a correspondingly
higher speed than the roller belts 21, 22.

A string of sausage links fed from the feeding roller
83 are conveyed in the passageway 6 by the advancing
roller belts 21, 22 which form the side walls of the
passageway 6 and which pinch the sausage links with
rollers 25.

The sausage links conveyed by the conveying means 32
are fed into the stretching means 41 and over the cutting
station formed between the conveying means 32 and the
stretching means 41. A twisted junction of the sausage
links is adequately stretched at the cutting station by the difference in conveying speed; namely, a sausage 85a pinched and conveyed by stretching means 41 is conveyed at, for example, twice the speed of a sausage 85b remaining in the conveying means 32, thus the twisted junction 86 between sausages 85a and 85b is stretched.

Then, the twisted junction 86 is stretched and made more slender, light from the emission means 71 reaches to the receiving means 72.  Thereby, the electric eye 73 detects the stretched twisted junction 86 of the sausage links and causes the clutch member 78 to engage to rotate the rotating plate 75 with the cutting edge 74 to cut the string at the junction.  On rotation of the rotating plate 75 the stud 80 provided on the rotating plate 79 operates the proximity switch 82, the plate then stops by the disengaging of the clutch member 78 and positions the cutting edge 74 under the table 2. The control box 84 provides the control of these operations.

At last, the cut length of one or more links of sausage are further conveyed to an output of the apparatus downstream of means 41.

This invention constructed as above can provide an apparatus which can accurately and efficiently cut the sausage string at the junction thereof and overcome the defect in the prior art.

Further, this invention can provide an apparatus which can pinch the sausage without crushing them, by pinching with a plurality of rollers of the conveying means provided between each pair of chains and protruded out-

(EP11407)
(3.8.78)

wardly and the belts of the stretching means can effect feeding by the adequate friction of notching or knurling on its belts.

Furthermore, each roller belt fitted around the sprocket wheels and pulleys is movable towards and away from the passageway for adapting to the feeding of different sausage links.

Moreover, it is hygienic and economical for the cutting edge to be bolted to the rotating plate so it can be easily exchanged or cleaned.

While two specific embodiments of the invention have been described and illustrated in detail, the invention is not limited to such embodiments since alternatives will readily present themselves to one skilled in the art without departing from the invention as set forth in the appended claims.

0007927

Claims:

1. An apparatus for cutting a string of sausage links at a junction between adjacent links comprising a conveying means provided at the upstream side of the apparatus, a stretching means provided downstream of the conveying means and a cutting means to cut the sausage string at a junction and provided at a cutting station intermediate said conveying means and stretching means,

characterised by

conveying means (32) for advancing the links at a first speed, which means includes a pair of spaced-apart, opposed movable roller belts (21, 22) defining a passageway (6) for the links, each roller belt (21, 22) having a plurality of spaced rotatably mounted rollers (5) disposed therealong engageable with respective lateral sides of the links to pinch them and advance the string as the roller belts (21, 22) move and drive means (9, 10) connected to said roller belts for moving them along said feed passageway, stretching means (41) spaced from said conveying means (32) for receiving the links from said conveying means and for further advancing the links at a second speed greater than said first speed to stretch each junction between links as it passes between said conveying means (32) and stretching means (41), said stretching means (41) including a pair of opposed movable members (39, 40, 69, 70) engageable with respective lateral sides of said links to pinch the links and drive means (46, 47) connected to said opposed movable members to advance such members, cutting means (74-79) disposed between said conveying and stretching means for cutting a selected one of the stretched junctions to divide the sausage string into lengths of at least one link, said cutting means including a cutting member (74,75)

0007927

movable in the space between said conveying and
stretching means and drive means (77-79) connected to
said cutting member for moving such member, and control
means (84) connected to said cutting means including
a sensor (73) for sensing the passage of each stretched
junction and adapted to activate said cutting member
drive means (77-79) when a selected one of said
stretched junctions passes said sensor.

2.   An apparatus according to claim 1, wherein said
opposed movable members comprise spaced-apart, opposed
movable belts (39, 40) defining a second passage
(38) for the links.

3.   An apparatus according to claim 1, wherein said
opposed, movable members comprise spaced-apart, opposed
contra-rotatable notched wheels (69, 70) engageable
with lateral respective sides of the links.

4.   An apparatus according to any one of claims 1 to 3,
wherein said sensor comprises an electric eye (73) having
an emission means (71) disposed on one lateral side
of the space between said conveying and stretching means
and a receiving means (72) disposed on an opposite
lateral side of the space between said conveying and
stretching means for receiving light from said emission
means directed across the passage of the links.

5.   An apparatus as claimed in any one of claims 1 to 4,
wherein said cutting member (74, 75) comprises a
rotatable plate (75) having a bolted-on blade portion
(74) movable across the passage in the space between
said conveying and stretching means.

6.    An apparatus as claimed in any one of claims 1 to 5, wherein said pair of opposed roller belts (21, 22) and said opposed movable members (39, 40, 69, 70) are laterally movable towards and away from the links to accommodate links of different diameters.

7.    An apparatus as claimed in any one of claims 1 to 6, wherein said control means (84) includes a count memory means for selecting the stretched junction to be cut.

## Fig 1

## Fig 4

# Fig 2

# Fig 3

**Europäisches Patentamt**

**European Patent Office**

**Office européen des brevets**

(19)

(11) Publication number: **0 007 928**
A1

(12) # EUROPEAN PATENT APPLICATION

(21) Application number: **78300273.6**

(22) Date of filing: **09.08.78**

(51) Int. Cl.3: **G 05 B 19/04, H 05 B 1/02**

(43) Date of publication of application: **20.02.80**
**Bulletin 80/4**

(84) Designated Contracting States: **CH DE FR GB NL SE**

(71) Applicant: **Cress, Steven B., 1330 Desert Willow Lane, Diamond Bar California (US)**

(72) Inventor: **Cress, Steven B., 1330 Desert Willow Lane, Diamond Bar California (US)**

(74) Representative: **Wilson, Joseph Martin, Withers & Rogers 4 Dyers Buildings Holborn, London, EC1N 2JT (GB)**

(54) **Heat control apparatus.**

(57) An automatic heat control apparatus for use with an electric heating element (6) in a kiln (4) or the like comprises a first power controller (12) having a plurality of on and off intervals. The first controller (12) supplies electric current to the kiln (4) heating element (6) during its on intervals, and further includes means (18) for adjusting the duration of the on intervals relative to the off intervals. A constant speed electric motor (20) is mechanically coupled to the first power controller (12) for gradually increasing the duration of the on intervals and decreasing the duration of the off intervals; such control ensures that the temperature inside the kiln (4) increases very gradually to lessen the risk of breaking the ceramic material being fired. Furthermore, the average speed of the motor (20) may be controlled by means of a second power controller (36), similar to the first controller (12), having a plurality of on and off intervals which intermittently energize the motor (20) for rotation thereof. By adjusting the duration of the on interval relative to the off intervals of the second controller, the average speed of rotation of the motor (20) may be selectively varied to control the rate of increase in the duration of the on interval in the first controller (12).